(19) **Europäisches Patentamt / European Patent Office / Office européen des brevets**

(11) **EP 3 658 763 B1**

(12) **FASCICULE DE BREVET EUROPEEN**

(45) Date de publication et mention de la délivrance du brevet:
**04.01.2023 Bulletin 2023/01**

(21) Numéro de dépôt: **18755524.8**

(22) Date de dépôt: **26.07.2018**

(51) Classification Internationale des Brevets (IPC):
**F02K 9/56** *(2006.01)*  **F02K 9/95** *(2006.01)*
**F02K 9/96** *(2006.01)*

(52) Classification Coopérative des Brevets (CPC):
**F02K 9/56; F02K 9/95; F02K 9/96;** F05D 2200/00;
F05D 2260/80

(86) Numéro de dépôt international:
**PCT/FR2018/051921**

(87) Numéro de publication internationale:
**WO 2019/020951 (31.01.2019 Gazette 2019/05)**

(54) **PROCÉDÉ ET DISPOSITIF DE DÉTECTION D'ALLUMAGE D'UNE CHAMBRE À COMBUSTION DE MOTEUR-FUSÉE, PROCÉDÉ DE DÉMARRAGE D'UN MOTEUR-FUSÉE, PROGRAMME D'ORDINATEUR, SUPPORT D'ENREGISTREMENT ET MOTEUR-FUSÉE**

VERFAHREN UND VORRICHTUNG ZUR DETEKTION DER ZÜNDUNG IN EINER BRENNKAMMER EINES RAKETENMOTORS, VERFAHREN ZUM STARTEN EINES RAKETENMOTORS, COMPUTERPROGRAMM, AUFZEICHNUNGSMEDIUM UND RAKETENMOTOR

METHOD AND DEVICE FOR DETECTING IGNITION IN A COMBUSTION CHAMBER OF A ROCKET MOTOR, METHOD FOR STARTING A ROCKET MOTOR, COMPUTER PROGRAM, RECORDING MEDIUM AND ROCKET MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2017 FR 1757152**

(43) Date de publication de la demande:
**03.06.2020 Bulletin 2020/23**

(73) Titulaire: **ArianeGroup SAS**
**78130 Les Mureaux (FR)**

(72) Inventeurs:
• **KLEIN, Manuel**
**27207 Vernon Cedex (FR)**

• **CASAL BAS, Anthony**
**27940 Aubevoye (FR)**
• **LE GONIDEC, Serge**
**27200 Vernon (FR)**

(74) Mandataire: **Cabinet Beau de Loménie**
**158, rue de l'Université**
**75340 Paris Cedex 07 (FR)**

(56) Documents cités:
**FR-A1- 2 923 294      FR-A1- 2 997 454**
**US-A1- 2003 010 015**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 658 763 B1

**Description**

DOMAINE DE L'INVENTION

L'invention concerne un procédé et un dispositif de détection d'allumage d'une chambre à combustion de moteur-fusée, un procédé de démarrage de moteur-fusée, et un moteur-fusée.

ARRIERE-PLAN DE L'INVENTION

Dans un moteur-fusée, le démarrage est une phase critique : l'allumage du moteur (c'est-à-dire la combustion des ergols) peut ne pas se produire, ce qui conduit le plus souvent à l'échec de la mission du lanceur-fusée ; de manière alternative, si le moteur s'allume trop tard, alors qu'une grande quantité d'ergols s'est accumulée sous forme imbrûlée dans la chambre de combustion, leur inflammation soudaine peut susciter une explosion qui peut endommager le moteur voire le détruire. Il est donc important de pouvoir déterminer de manière précise si la mise à feu d'un moteur a bien eu lieu et à quel moment elle se produit.

Il existe donc un besoin pour un procédé et un dispositif permettant de déterminer, de la manière la plus fiable possible, si un moteur-fusée est allumé.

Des procédés et dispositifs permettant de déterminer si un moteur-fusée est allumé sont par exemple divulgués par les documents FR 2997454 et US 2003/0010015.

OBJET ET RESUME DE L'INVENTION

Un premier objectif de l'invention est de satisfaire ce besoin en proposant un procédé de détection d'allumage d'une chambre à combustion de moteur-fusée qui permette de détecter de manière la plus sûre possible si un moteur-fusée est allumé ou non.

Cet objectif est atteint grâce à un procédé de détection d'allumage d'une chambre à combustion de moteur-fusée selon la revendication 1, le procédé comprenant les étapes suivantes, réalisées de manière itérative au moyen d'un calculateur :

A) pour chacun des ergols, on acquiert des valeurs de grandeurs qui permettent de calculer des valeurs moyennes PGC_H0, PGC_H1 et des écarts-types $\sigma$_PGCH0, $\sigma$_PGCH1 d'une pression théorique d'allumage et d'une pression théorique de non-allumage dans la chambre de combustion, qui sont les pressions dans la chambre de combustion respectivement dans l'hypothèse de non-allumage (H0) qui correspond au cas où la combustion n'a pas lieu et dans l'hypothèse d'allumage (H1) qui correspond au cas où la combustion a lieu ;

B) en fonction des valeurs acquises à l'étape A), on calcule les valeurs moyennes PGC_HO, PGC_H1 et les écarts-types $\sigma$_PGCHO, $\sigma$_PGCH1 de la pression théorique d'allumage et de la pression théorique de non-allumage dans la chambre de combustion ;

C) on détermine un statut d'allumage du moteur ; l'étape C) comprenant les étapes :

C1) on détermine des coefficients A et B permettant de déterminer les pressions limites d'allumage et de non-allumage, à partir de la probabilité de non-détection de l'allumage Pnd et de la probabilité de fausse alarme de détection d'allumage Pf, à l'aide des équations suivantes :

$$(1) \qquad A = \frac{Pnd}{1-Pf} \ et \ B = \frac{1-Pnd}{Pf}$$

C2) on attribue au statut d'allumage du moteur (S) une valeur allumé, non allumé ou indéterminé, indiquant respectivement que l'on considère, pour un instant considéré, que le moteur est allumé, qu'il n'est pas allumé, ou que l'on ne sait pas ; le statut d'allumage (S) étant obtenu en calculant des bornes d'allumage/non-allumage A1 et B1 et une somme $\Sigma$ à l'aide des équations suivantes à partir des coefficients A et B :

$$(2) \qquad A1 = 2lnA + 2n \ln\left(\frac{\sigma_{PGC_{H1}}}{\sigma_{PGC_{H0}}}\right)$$

$$(3) \quad \Sigma = \sum_{i=n-p}^{n} \left( \frac{\left(PGC_i - PGC_{H0}\right)^2}{\sigma_{PGC_{H0}}^2} - \frac{\left(PGC_i - PGC_{H1}\right)^2}{\sigma_{PGC_{H1}}^2} \right)$$

$$(4) \quad B1 = 2lnB + 2n \ln \left( \frac{\sigma_{PGC_{H1}}}{\sigma_{PGC_{H0}}} \right)$$

dans lesquelles :

- PGCi est la pression mesurée dans la chambre de combustion à l'instant i correspondant à une boucle de calcul en cours ;
- n est l'indice de la boucle de calcul à l'instant considéré ;
- p est un entier prédéterminé ;

et en affectant au statut d'allumage (S) une valeur parmi des possibilités Non-allumé, Allumé, Indéterminé, en comparant la somme $\Sigma$ aux bornes d'allumage/non-allumage A1 et B1 :
- Si $\Sigma$ < A1 : on fixe la valeur du statut d'allumage (S) à la valeur « non allumé » ;
- Si A1 < $\Sigma$ < B1 : on fixe la valeur du statut d'allumage (S) à la valeur « indéterminé » ; et
- Si $\Sigma$ > B1 : on fixe la valeur du statut d'allumage (S) à la valeur « allumé ».

Le procédé repose sur le test de Wald. Dans le cadre de l'invention, ce test est mis en oeuvre de manière à déterminer, avec une confiance prédéterminée, la valeur du statut d'allumage S du moteur. Ce statut indique si la combustion a lieu, si la combustion n'a pas lieu, ou si l'on est dans une zone d'indétermination.
Dans un mode de réalisation préférentiel, les grandeurs dont les valeurs sont acquises à l'étape A) incluent, pour chaque ergol, la pression et la masse volumique de l'ergol au point d'injection dans la chambre de combustion. Cependant, d'autres valeurs peuvent éventuellement être acquises plutôt que celles-ci, à condition que ces autres valeurs permettent de calculer les pressions moyennes (PGC_HO, PGC_H1) et les écarts-types ($\sigma$_PGCHO, $\sigma$_PGCH1) de la pression théorique d'allumage et de non-allumage dans la chambre de combustion.
La détection d'allumage repose donc sur la démarche suivante :

A. Génération d'hypothèses de fonctionnement

On commence par évaluer deux hypothèses, correspondant aux deux situations possibles :

o L'hypothèse H0 traduit le domaine de non-allumage de la chambre
o L'hypothèse H1 traduit le domaine d'allumage.

Pour chacune de ces hypothèses H0 ou H1, on suppose que la pression dans la chambre de combustion est une pression théorique caractérisée par une valeur moyenne et un écart type, en faisant l'hypothèse que cette pression théorique suit une loi normale. La probabilité Pk(xi) que la pression soit égale à la valeur xi, dans l'hypothèse k, est donc donnée par l'équation :

$$Pk(xi) = \frac{1}{\sqrt{2\Pi}\sigma_k} e^{-\frac{(x_i - m_k)^2}{2\sigma_k^2}}$$

dans cette formule :

i est un indice correspondant à l'instant d'échantillonnage,
xi est la valeur de la pression à un instant ti,
m est la valeur moyenne de la pression,
$\sigma$ est l'écart type de la pression,
k est l'indice indiquant, pour les paramètres moyenne m et écart-type

$\sigma$, quelle est l'hypothèse considérée, à savoir H0 ou H1. Ainsi :
si k=0, alors $m_0$ = PGC_H0 et $\sigma_0$ = $\sigma$_PGCHO ;
si k=1, alors $m_1$ = PGC_H1 et $\sigma_1$= $\sigma$_PGCH1.

Pour chacune de des hypothèses H0 ou H1, la valeur moyenne (PGC_HO, PGC_H1) et l'écart-type de la pression dans la chambre de combustion ($\sigma$_PGCHO, $\sigma$-PGCH1) varient selon différents paramètres :

- des paramètres liés aux conditions de fonctionnement, comme les débits d'alimentation (qui peuvent être estimés par exemple à travers les pressions d'injection) ; et
- des paramètres prédéterminés, comme le domaine d'incertitude des capteurs et le domaine d'incertitude des caractéristiques thermodynamiques

B. Comparaison de ces hypothèses avec les valeurs mesurées de pression dans la chambre de combustion afin de statuer sur la conformité du signal à l'une ou l'autre des situations ou bien un statut d'incertitude temporaire.

On compare les valeurs de pression mesurées à l'une et l'autre des deux hypothèses en utilisant le test de Wald de la manière indiquée précédemment. Cette comparaison fait intervenir le rapport de vraisemblance qui est :

$$Vn = \frac{P1(Xn)}{P0(Xn)} = \prod_{i=n-p}^{n} \frac{P1(xi)}{P0(xi)}$$

Dans cette équation, n est l'indice de l'itération en cours, Xn est l'événement défini comme l'obtention de la suite spécifique des valeurs de pression xi mesurées lors des instants ti pour des itérations successives de n-p à n de l'algorithme. La fenêtre temporelle utilisée inclut les itérations n-p à p et est donc glissante au cours du temps.

Dans le cas présent, le rapport de vraisemblance s'écrit sous la forme de la variable définie $\Sigma$ plus haut par l'équation (3), et le test de Wald consiste à comparer la valeur de $\Sigma$ aux valeurs des paramètres A1 et B1.

Si le test ne permet pas de conclure sur l'état allumé/non allumé de la chambre de combustion et que l'on est donc dans l'incertitude, à l'itération suivante de l'algorithme la fenêtre d'étude est agrandie (en augmentant la valeur de p) suivant jusqu'à ce que l'on puisse statuer sur la situation dans laquelle on se trouve.

Dès qu'au cours d'une itération de l'algorithme on parvient à statuer sur la situation dans la chambre de combustion (allumée/non-allumée), on réinitialise la largeur de fenêtre en donnant à celle-ci une valeur $p_0$ définie par défaut pour l'algorithme.

Le paramètre 'p' ou largeur de fenêtre correspond aux nombres de valeurs successives des paramètres de conditions de fonctionnement qui sont prises en compte pour réaliser le test de Wald. Il correspond donc à la durée de la période de temps sur laquelle on se fonde pour déterminer si la situation est une situation d'allumage ou de non-allumage.

L'entier 'p' est normalement choisi égal inférieur ou égal à une valeur maximale Pmax qui est telle que la pression dans la chambre de combustion avant l'itération d'indice n-Pmax n'apporte plus d'information quant à l'état allumé/non allumé de la chambre à l'itération n.

Dans un mode de mise en œuvre, à l'étape B), la valeur moyenne PGC_H1 de la pression théorique d'allumage dans la chambre de combustion dans l'hypothèse où la combustion a lieu, est calculée à partir du débit total des ergols injectés dans la chambre de combustion, de la vitesse caractéristique des gaz de combustion et de la section efficace du divergent de la tuyère du moteur-fusée. De préférence, cette valeur moyenne PGC_H1 de la pression théorique d'allumage est calculée grâce à la relation suivante :

$$(5) \quad PGC_{H1} = \frac{(QO+QH)*C^*}{\text{Seff}} = \frac{Q_{tot}C^*}{Seff}$$

Dans un mode de mise en œuvre, lors de l'étape A, on acquiert de plus une pression dans la chambre de combustion ; et à l'étape B), l'écart-type $\sigma$ PCG_HO de la pression théorique dans la chambre de combustion dans l'hypothèse (H0) de non-allumage de la chambre est donné par la formule suivante :

$$(6) \quad \sigma_{PGC\_H0} = \sigma_{PGCmes}$$

où $\sigma_{PGCmes}$ représente l'écart-type de la mesure de pression dans la chambre de combustion.

Cette mesure de pression peut être unique, et dès lors l'incertitude $\sigma_{PGCmes}$ est l'incertitude de la mesure. Dans le cas où la mesure de la pression dans la chambre de combustion est faite de manière redondante, c'est-à-dire par exemple sous la forme de deux mesures PGC1 et PGC2, l'incertitude $\sigma$ PGC peut être donnée par la formule :

$$\sigma_{PGCmes} = \frac{1}{\sqrt{2}}\sqrt{\sigma^2_{PGC1} + \sigma^2_{PGC2}}$$

Dans un mode de mise en œuvre, lors de l'étape A, on acquiert de plus une valeur de la pression atmosphérique $P_{ATM}$ à l'extérieur du moteur-fusée ; à l'étape B), en fonction des pressions et masses volumiques calculées à l'étape A), on calcule des débits de chacun des ergols ; et l'écart-type $\sigma$ PCG_H1 de la pression théorique dans la chambre de combustion en cas d'allumage de la chambre (hypothèse H1) est calculé en réalisant les étapes suivantes :

- on calcule le rapport de mélange RM du moteur-fusée et son écart-type $\sigma_{RM}$ par l'équation suivante :

$$RM = \frac{\sqrt{\left(\frac{\rho}{k}\right)_O (POI - Patm)}}{\sqrt{\left(\frac{\rho}{k}\right)_H (PHI - Patm)}}$$

Par ailleurs, l'écart-type $\sigma_{RM}$ du rapport de mélange RM du moteur-fusée vérifie :

$$\sigma_{RM} = \sigma_{QO/QH} = \sqrt{\frac{1}{QH^2}\left(\sigma^2_{QO} + RM^2\sigma^2_{QH}\right)}$$

Par suite, on calcule l'écart-type $\sigma_{RM}$ du rapport de mélange RM du moteur-fusée par l'équation suivante :

$$\sigma_{RM} = \frac{1}{\sqrt{2}}\frac{\left(\frac{\rho}{k}\right)_O}{\left(\frac{\rho}{k}\right)_H}\frac{1}{(PHI - Patm)}\sqrt{\left(\sigma^2_{POI} + \frac{(POI - Patm)^2}{(PHI - Patm)^2}\sigma^2_{PHI}\right)}$$

- on calcule alors les écarts-types $\sigma\_C^*$ de la vitesse caractéristique C* et $\sigma_{QTOT}$ du débit total des ergols injectés dans la chambre de combustion par les équations suivantes :

$$\sigma_{C^*} = f(\sigma_{RM})$$

$$\sigma_{Qtot} = \sigma_{QH+QO} = \sqrt{\sigma^2_{QO} + \sigma^2_{QH}} \quad \text{avec pour chaque ergol } \sigma_{Qx} = \frac{1}{\sqrt{2}}\frac{\rho}{k}\sigma_{Pxl}$$

Dans ces équations :

x représente un ergol quelconque, par exemple l'oxygène ou l'hydrogène,
$\sigma_{POI}$ et $\sigma_{PHI}$ désignent les écarts-types des pressions POA et PHI des deux ergols à leurs points d'injection,
$k_x$ le coefficient de perte de charge $k_l$ pour l'ergol x,
$\sigma_{Qx}$ et $\sigma_{Pxl}$, pour l'ergol x, l'écart type respectivement d'un débit et d'une pression de l'ergol x au point d'injection,
le rapport de mélange RM des deux ergols est égal au rapport entre le débit de comburant sur le débit de carburant à l'injection dans la chambre de combustion
QO, QH et Qtot sont respectivement un débit de comburant, de carburant, et un débit cumulé des deux ergols, dans la chambre de combustion ;

C* est une vitesse caractéristique des gaz de combustion en sortie de la chambre de combustion ;

f est une fonction prédéterminée ;

. on calcule ensuite l'écart-type σ PGC_H1 de la pression théorique dans la chambre de combustion, en cas

$$\sigma\,\text{PGC H1} = \frac{1}{\text{Seff}}\sqrt{C^{*2}\sigma_{Qtot}^2 + Qtot^2\sigma_{C*}^2}$$

d'allumage de la chambre au moyen de la formule :

et par conséquent :

$$\sigma_{PGC\_H1} = \frac{1}{\text{Seff}}\sqrt{\frac{1}{2}(C^*(RM))\left(\left(\left(\frac{\rho}{k}\right)_O\frac{1}{Q_O}\sigma_{POI}\right)^2 + \left(\left(\frac{\rho}{k}\right)_H\frac{1}{Q_H}\sigma_{PHI}\right)^2\right) + \left(\sqrt{\left(\frac{\rho}{k}\right)_O(POI - Patm)} + \sqrt{\left(\frac{\rho}{k}\right)_H(PHI - Patm)}\right)^2\sigma_{C*}^2}$$

Dans les formules ci-dessus, le coefficient de perte de charge $k_I$ pour un ergol I est donné par l'équation :

$$k_I\,Q^2\,/\,\rho = \Delta P_I$$

où Q est le débit dans le circuit d'alimentation en ergol considéré, et $\Delta P_I$ est la différence de pression entre le point d'injection en ergol pour l'ergol considéré et la chambre de combustion.

L'invention concerne également un procédé de démarrage d'un moteur-fusée, dans lequel lors du démarrage d'au moins un moteur du moteur-fusée, on détecte si l'allumage du moteur a bien eu lieu en exécutant le procédé de détection d'allumage tel que défini précédemment.

Dans un mode particulier de réalisation, les différentes étapes du procédé de détection d'allumage d'une chambre à combustion de moteur-fusée ou de démarrage d'un moteur-fusée selon l'invention sont déterminées par des instructions de programmes d'ordinateurs.

En conséquence, l'invention vise aussi un programme d'ordinateur sur un support d'informations selon la revendication 8, en particulier un support d'informations non volatiles, et comportant des instructions de code de programme qui, lorsque le programme est exécuté par un ordinateur, conduisent celui-ci à mettre en oeuvre les étapes de l'un des procédés définis précédemment. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement selon la revendication 9, en particulier un support d'enregistrement non volatile, lisible par un ordinateur sur lequel est enregistré un programme d'ordinateur tel que défini précédemment. Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations ou d'enregistrement peut être un circuit intégré dans lequel le programme est incorporé, le circuit étant adapté pour exécuter ou pour être utilisé dans l'exécution du procédé de détection d'allumage d'une chambre à combustion de moteur-fusée ou de démarrage d'un moteur-fusée.

Un deuxième objectif de l'invention est de proposer un dispositif de détection d'allumage d'une chambre à combustion de moteur-fusée qui permette de détecter de manière la plus sûre possible si un moteur-fusée est allumé ou non. Cet objectif est atteint grâce à un dispositif de détection d'allumage d'une chambre à combustion de moteur-fusée selon la revendication 10, le dispositif comportant :

A) une unité d'acquisition configurée pour acquérir, pour chacun des ergols (H,O), des valeurs de grandeurs qui permettent de calculer des valeurs moyennes PGC_H0, PGC_H1 et des écarts-types σ_PGCH0, σ_PGCH1 d'une pression théorique d'allumage et d'une pression théorique de non-allumage dans la chambre de combustion, qui sont les pressions dans la chambre de combustion respectivement dans l'hypothèse de non-allumage (H0) qui correspond au cas où la combustion n'a pas lieu et dans l'hypothèse d'allumage (H1) qui correspond au cas où la combustion a lieu ;

B) une unité de calcul de valeurs moyennes et d'écarts-types configurée pour, en fonction des valeurs acquises par l'unité d'acquisition, calculer les valeurs moyennes PGC_HO, PGC_H1 et les écarts-types $\sigma$_PGCHO, $\sigma$_PGCH1 de la pression théorique d'allumage et de la pression théorique de non-allumage dans la chambre de combustion ;
C) une unité de détermination de statut d'allumage du moteur (56) configurée pour déterminer un statut d'allumage du moteur (S) ; l'unité de détermination de statut d'allumage du moteur (S) étant configurée pour :

C1) déterminer des coefficients A et B permettant de déterminer les pressions limites d'allumage et de non-allumage, à partir de la probabilité de non-détection de l'allumage Pnd et de la probabilité de fausse alarme de détection d'allumage Pf, à l'aide des équations suivantes :

$$(1) \quad A = \frac{Pnd}{1-Pf} \; et \; B = \frac{1-Pnd}{Pf}$$

et

C2) attribuer au statut d'allumage du moteur (S) une valeur allumé, non allumé ou indéterminé, indiquant respectivement que l'on considère, pour un instant considéré, que le moteur est allumé, qu'il n'est pas allumé, ou que l'on ne sait pas ; le statut d'allumage (S) étant obtenu en calculant des bornes d'allumage/non-allumage A1 et B1 et une somme $\Sigma$ à l'aide des équations suivantes :

$$(2) \quad A1 = 2lnA + 2n\ln\left(\frac{\sigma_{PGC_{H1}}}{\sigma_{PGC_{H0}}}\right)$$

$$(3) \quad \Sigma = \sum_{i=n-p}^{n}\left(\frac{\left(PGC_i - PGC_{H0}\right)^2}{\sigma_{PGC_{H0}}^2} - \frac{\left(PGC_i - PGC_{H1}\right)^2}{\sigma_{PGC_{H1}}^2}\right)$$

$$(4) \quad B1 = 2lnB + 2n\ln\left(\frac{\sigma_{PGC\_H1}}{\sigma_{PGC\_H0}}\right)$$

où :

- PGCi est la pression mesurée dans la chambre de combustion à l'instant (ti) correspondant à la boucle de calcul en cours ;
- n est l'indice de la boucle de calcul à l'instant considéré ;
- p est un entier prédéterminé (par exemple, p peut être égal au nombre minimal d'itérations de l'algorithme pour lequel la pression dans la chambre de combustion avant l'itération n-p n'apporte plus d'information quant à l'état allumé/non allumé de la chambre à l'itération n-p) ;

et en affectant au statut d'allumage (S) une valeur parmi des possibilités Non-allumé, Allumé, Indéterminé, en comparant la somme $\Sigma$ aux bornes d'allumage/non-allumage A1 et B1 :

- Si $\Sigma$ < A1 : en fixant la valeur du statut d'allumage (S) à la valeur « non allumé » ;
- Si A1 < $\Sigma$ < B1 : en fixant la valeur du statut d'allumage (S) à la valeur « indéterminé » ; et
- Si $\Sigma$ > B1 : en fixant la valeur du statut d'allumage (S) à la valeur « allumé ».

Dans un mode de réalisation préférentiel, les grandeurs dont l'unité d'acquisition est configurée pour acquérir les valeurs incluent, pour chaque ergol, la pression et la masse volumique de l'ergol au point d'injection dans la chambre de combustion.

L'unité d'acquisition, pour acquérir la masse volumique de l'ergol au point d'injection, peut ainsi par exemple être configurée pour acquérir des paramètres de l'ergol et pour calculer la masse volumique de l'ergol au point d'injection à partir des paramètres de l'ergol ainsi acquis.

L'invention concerne également un moteur-fusée équipé d'un dispositif de ce type.

BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

- la figure 1 est une vue schématique d'un moteur-fusée comprenant un dispositif selon l'invention ;
- la figure 2 est une vue schématique montrant l'architecture matérielle d'un dispositif selon l'invention, dans un mode de réalisation ;
- la figure 3 est un diagramme montrant les étapes du procédé de détection de détection d'allumage de chambre de combustion de moteur fusée selon l'invention.

DESCRIPTION DETAILLEE DE L'INVENTION

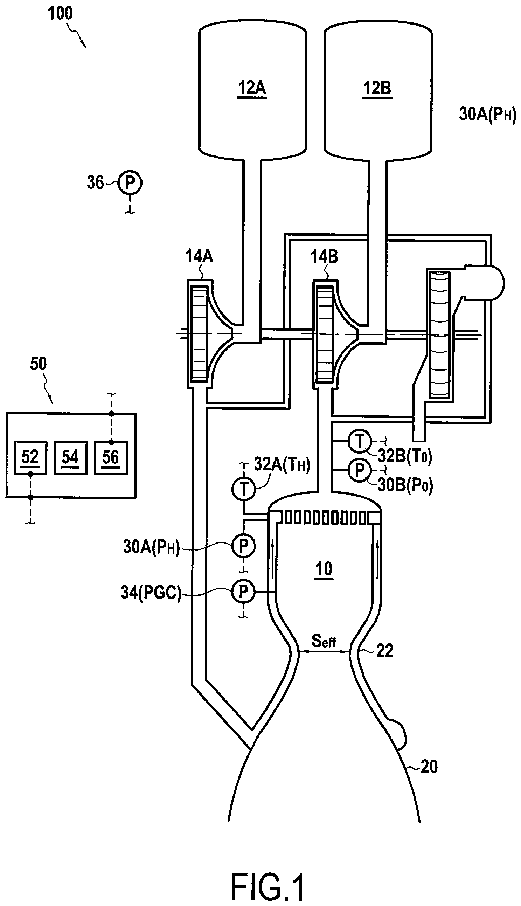

En faisant référence aux figures 1 à 3, un exemple de mise en oeuvre du procédé selon l'invention va maintenant être décrit.

Le procédé est présenté dans le cas d'un moteur-fusée consommant comme ergols de l'hydrogène (H) et de l'oxygène (O) ; il peut naturellement être transposé à tout moteur-fusée, quels que soient les ergols consommés par celui-ci.

La figure 1 représente un moteur-fusée 100 équipé d'un dispositif 50 de détection d'allumage d'une chambre à combustion de moteur-fusée conforme à l'invention.

Le dispositif 50 permet de détecter le statut d'allumage de la chambre à combustion du moteur-fusée 100.

Le moteur fusée 100 présenté par la figure 1 comporte une chambre de combustion 10, une tuyère 20 présentant un col de tuyère 22. La chambre de combustion 10 est alimentée par un réservoir d'hydrogène 12A et un réservoir d'oxygène 12B, respectivement via des pompes 14A et 14B.

Deux capteurs de pression 30A et 30B et deux capteurs de température 32A et 32B sont disposés au voisinage des points d'injection des ergols dans la chambre de combustion. Les capteurs 30A et 30B mesurent les pressions des ergols au point d'injection dans la chambre de combustion 10. Un capteur 34 mesure la presssion $P_{GC}$ dans la chambre de combustion, et un capteur 36 mesure la pression, dite 'pression atmosphérique' $P_{ATM}$ à l'extérieur du moteur 100.

Le moteur 100 comporte enfin un contrôleur 50, dont la structure et le fonctionnement seront détaillés plus loin. Le contrôleur 50 est relié aux capteurs de pression 30A, 30B et 36 et aux capteurs de température 32A, 32B de manière à acquérir les informations de pression et de température produites par ces capteurs.

Le procédé présenté vise à détecter l'allumage du moteur-fusée 100, c'est-à-dire le début de la combustion des ergols dans la chambre de combustion.

L'information fournie par le procédé est un statut d'allumage S. Ce statut peut prendre trois valeurs : 'allumé', 'non-allumé', ou encore 'indéterminé' (On assimile l'allumage de la chambre de combustion à l'allumage du moteur).

Le procédé est lancé pendant la procédure (ou du procédé) de démarrage du moteur-fusée 100.

Dès que la chambre de combustion est alimentée avec les deux ergols (hydrogène et oxygène), on lance le procédé de détection d'allumage, à un instant initial t0.

On effectue alors de manière itérative les étapes A) à D) décrites précédemment ; à chaque itération, l'indice 'i' de l'algorithme est incrémenté.

Le temps t est mesuré à partir de l'instant t0. A chaque boucle, l'instant correspondant à l'itération i est noté ti.

A chaque boucle, on réalise donc les étapes suivantes :

A) Détermination de la pression (PHI,POI) et de la masse volumique ($\rho$ OI, $\rho$ HI) des ergols injectés, et de la pression extérieure $P_{ATM}$

Pour chacun des ergols, on détermine la pression et la masse volumique des ergols lors de leur injection dans la chambre de combustion. De manière générale, ces grandeurs peuvent être mesurées par des capteurs ou éventuellement estimées ou déterminées de manière indirecte par calcul.

En l'occurrence, dans le mode de mise en oeuvre présenté :

- on mesure les pressions PHI, POI des ergols à l'aide des capteurs 30A,30B ;
- on mesure les températures THI, TOI des ergols à l'aide des capteurs 32A,32B ;
- on calcule alors les masses volumiques p_OI, p_HI des ergols à partir des pressions et températures mesurées, respectivement PHI, POI et THI, TOI.

Les pressions et températures des ergols sont mesurées au niveau des points d'injection ou à faible distance en amont de ceux-ci sur les circuits d'alimentation en ergols de la chambre de combustion 10. Même dans le deuxième cas (mesure effectuée à faible distance en amont des injecteurs, sur les circuits d'alimentation en ergols de la chambre de combustion 10), les points de mesure sont considérés comme étant les points d'injections des ergols dans la chambre de combustion.

De plus, on acquiert la valeur de la pression atmosphérique $P_{ATM}$ à l'extérieur du moteur-fusée par le capteur 36.

B) Calcul des valeurs moyennes et des écarts-types de la pression théorique dans la chambre de combustion

La pression théorique désigne la pression dans l'une des hypothèses H0 (non-allumage) ou H1 (allumage).

B1) Valeurs moyennes de la pression théorique

Les débits d'oxygène QO et d'hydrogène QH sont calculés à partir du coefficient de pertes de charge k, des masses volumiques des ergols $\rho O$ et $\rho H$ et des pressions POI et PHI au niveau des injecteurs d'oxygène et d'hydrogène, grâce à la relation :

$$(1) \quad Qx = \sqrt{\rho\ (PxI\text{-}P_{GC})/k}$$

où PGC est la pression dans la chambre de combustion, et PxI la pression au point d'injection (x désigne l'ergol : O pour Oxygène, H pour Hydrogène), $\rho$ est la masse volumique, et k est le coefficient de pertes de charge correspondant à l'injection dans la chambre, qui dépend de caractéristiques du circuit connues à l'avance.

On en déduit le débit total Qtot, égal à la somme des débits d'oxygène et d'hydrogène, et le rapport de mélange RM, égal au rapport entre le débit de comburant et le débit de carburant (QO/QH).

La vitesse caractéristique (en m/s) des gaz, notée C*, est le coefficient issu des paramètres des gaz servant pour des calculs des débits en régime sonique. La vitesse caractéristique C* est alors déterminée en fonction du rapport de mélange RM au moyen d'une table.

On utilise de plus le coefficient Seff, qui est un paramètre fixé égal à la section du col de la tuyère multipliée par un coefficient d'efficacité représentant le rendement d'écoulement. Ce coefficient est inférieur et voisin de l'unité.

La valeur moyenne théorique de la pression dans la chambre de combustion, dans l'hypothèse d'allumage du moteur (H1), est alors calculée grâce à la relation suivante :

$$(2) \quad PGC\_H1 = \frac{Q_{tot}C^*}{Seff}$$

Inversement, dans l'hypothèse de non-allumage du moteur (H0), la valeur moyenne de la pression dans la chambre de combustion est considérée, dans la nécessité d'un calcul simplifié, comme étant égale à la pression de l'environnement, c'est-à-dire la pression du « vide » ou de la pression « atmosphérique » soit :

$$(3) \quad PGC_{H0} = Patm$$

où $P_{atm}$ est la pression à l'extérieur du moteur, mesurée par le capteur de pression 36.

B2) Ecarts-types de la pression théorique

L'écart-type $\sigma_{PGC\_H0}$ de la pression théorique dans la chambre de combustion en cas de non-allumage de la chambre (hypothèse H0) est donné par la formule suivante :

$$(4) \quad \sigma_{PGC\_H0} = \sigma_{PGCmes}$$

où σPGCmes représente l'écart-type sur les mesures de pression acquises en entrée du système ; en effet, en cas de non-allumage, l'incertitude provient uniquement des capteurs.

La précision donnée à 3 écart-types pour un capteur est usuellement de l'ordre de 1 % de l'étendue de mesure du capteur. Par exemple, pour un capteur de pression configuré pour permettre la mesure d'une pression maximale de 100 Bars, l'écart-type σ associé au capteur peut être choisi égal à un tiers de 1% de l'étendue de mesure, soit 0,33 Bar.

L'écart-type $\sigma_{PGC\_H1}$ de la pression théorique dans la chambre de combustion en cas d'allumage de la chambre (hypothèse H1) est calculé de la façon suivante.

On utilise les débits (QO, QH) de chacun des ergols calculés à l'étape A).

L'écart-type $\sigma_{PGC\_H1}$ de la pression théorique dans la chambre de combustion en cas d'allumage de la chambre est calculé en réalisant les étapes suivantes :

. on calcule le rapport de mélange RM du moteur-fusée et son écart-type $\sigma_{RM}$ par les équations suivantes :

$$RM = \frac{\sqrt{\left(\frac{\rho}{k}\right)_O (POI - Patm)}}{\sqrt{\left(\frac{\rho}{k}\right)_H (PHI - Patm)}}$$

$$\sigma_{RM} = \frac{1}{\sqrt{2}} \frac{\left(\frac{\rho}{k}\right)_O}{\left(\frac{\rho}{k}\right)_H} \frac{1}{(PHI - Patm)} \sqrt{\left(\sigma_{POI}^2 + \frac{(POI - Patm)^2}{(PHI - Patm)^2} \sigma_{PHI}^2\right)}$$

. on calcule alors les écarts-types $\sigma\_C^*$ de la vitesse caractéristique C*, et $\sigma\_{QTOT}$ du débit total des ergols injectés dans la chambre de combustion, de la manière suivante:

L'écart-type $\sigma\_C^*$ est fonction de l'écart-type du rapport de mélange suivant une fonction déterminée à l'avance :

$$\sigma_{C^*} = f(\sigma_{RM})$$

L'écart-type du débit total σ Qtot est calculé en fonction des écarts-types des débits respectifs des deux ergols :

$$\sigma_{Qtot} = \sigma_{QH+QO} = \sqrt{\sigma_{QO}^2 + \sigma_{QH}^2}$$

Pour chaque ergol, l'écart type du débit Q est déterminé en fonction de l'écart-type de la pression P par la formule :

$$\sigma_{Qx} = \frac{1}{\sqrt{2}} \frac{\rho}{k} \sigma_{Pxl}$$

. On calcule ensuite l'écart-type σ PGC_H1 de la pression théorique dans la chambre de combustion, en cas d'allumage de la chambre au moyen de la formule :

$$\sigma_{PGC\_H1} = \frac{1}{Seff}\sqrt{\frac{1}{2}(C^*(RM))\left(\left(\left(\frac{\rho}{k}\right)_O\frac{1}{Q_O}\sigma_{POI}\right)^2 + \left(\left(\frac{\rho}{k}\right)_H\frac{1}{Q_H}\sigma_{PHI}\right)^2\right) + \left(\sqrt{\left(\frac{\rho}{k}\right)_O(POI - Patm)} + \sqrt{\left(\frac{\rho}{k}\right)_H(PHI - Patm)}\right)^2 \sigma_{C^*}^2}$$

## C) Détermination du statut d'allumage du moteur

Le statut d'allumage du moteur (ou 'statut d'allumage') est une variable S qui indique que l'on considère, pour l'instant considéré, que le moteur est allumé, qu'il n'est pas allumé, ou que l'on ne sait pas.

C1) Détermination des coefficients (A) et (B) permettant de calculer les limites de pression de non-allumage et de pression d'allumage Conformément à la théorie du test de Wald, on détermine alors des coefficients permettant le calcul des limites de pression de non-allumage (A) et de pression d'allumage (B), à partir de la probabilité de non-détection de l'allumage (Pnd) et de la probabilité de fausse alarme de détection d'allumage (Pf), à l'aide des équations suivantes :

$$A = Pnd \,/\, (1\text{-}Pf)$$

$$B = (1 - Pnd)/Pf$$

Dans le contexte de détection pour un élément en relation avec la sécurité, les valeurs de la probabilité de non-détection de l'allumage (Pnd) et la probabilité de fausse alarme de détection d'allumage (Pf) sont des valeurs que l'on choisit en faisant un compromis entre un taux de fausse alarme (disponibilité) et de sécurité (taux de non détection).

C2) Détermination du statut d'allumage du moteur

Le statut d'allumage S est calculé en deux étapes.

On calcule d'abord les limites de pression A1 et B1, et la somme $\Sigma$ :

$$A1 = 2lnA + 2n\ln\left(\frac{\sigma_{PGC_{H1}}}{\sigma_{PGC_{H0}}}\right)$$

$$\Sigma = \sum_{i=n-p}^{n}\left(\frac{(PGC_i - PGC_{H0})^2}{\sigma_{PGC_{H0}}^2} - \frac{(PGC_i - PGC_{H1})^2}{\sigma_{PGC_{H1}}^2}\right)$$

$$B1 = 2lnB + 2n\ln\left(\frac{\sigma_{PGC\_H1}}{\sigma_{PGC\_H0}}\right)$$

Dans ce calcul, p est le nombre de valeurs sur lesquelles on se fonde pour déterminer si l'on est dans une situation d'allumage ou de non-allumage ; le paramètre p définit donc la durée de la période ou fenêtre temporelle prise en compte dans le calcul. Pour déterminer le statut d'allumage S, on compare alors la somme $\Sigma$ aux valeurs A1 et B1 :

- Si $\Sigma < A1$ : on fixe la valeur du statut d'allumage S à la valeur « non allumé » ;
- Si $A1 < \Sigma < B1$ : on fixe la valeur du statut d'allumage S à la valeur « indéterminé » ; et
- Si $\Sigma > B1$ : on fixe la valeur du statut d'allumage S à la valeur « allumé ».

A chaque boucle, les termes A1, B1, Σ sont recalculés sur la base des valeurs actualisées de la pression et de l'écart-type des pressions théoriques respectivement dans l'hypothèse de non-allumage H0 ou dans l'hypothèse d'allumage H1.

A l'issue d'une boucle, si l'on détermine que le moteur est allumé ou non-allumé, on réinitialise la valeur de p à une valeur par défaut. Si inversement, pour l'itération considérée, l'algorithme conclut à une situation d'indétermination, on incrémente la valeur de p pour la boucle suivante, sans dépasser toutefois une valeur maximale.

<u>D) Contrôle de l'accumulation d'ergols imbrûlés</u>

Sur la base du statut d'allumage du moteur, on calcule alors un indicateur d'allumage X. L'indicateur d'allumage est généralement égal au statut d'allumage et indique par conséquent si l'on considère que le moteur est allumé ou non ; cependant, l'indicateur d'allumage peut prendre en compte une valeur supplémentaire qui indique, dans le cas où l'on considère que le moteur ne s'est pas allumé, qu'il faut interrompre la procédure d'allumage du moteur.

En effet, après un certain délai, appelé délai d'allumage et noté T, si l'allumage du moteur n'a pas encore eu lieu, l'accumulation d'ergols imbrûlés dans la chambre de combustion rend l'allumage dangereux pour le moteur. Par conséquent, au-delà du délai d'allumage T, il est préférable d'évacuer les ergols accumulés dans la chambre de combustion, puis de relancer un cycle complet d'allumage du moteur.

Aussi, lorsque le statut d'allumage S a été déterminé à l'étape C :

Si à l'instant ti considéré, le délai maximal T n'est pas atteint (ti < T) : on affecte à l'indicateur d'allumage la valeur du statut d'allumage du moteur S ;

Si le délai maximal est atteint (ti > T): on affecte à l'indicateur d'allumage X une valeur signalant que l'allumage du moteur doit être interrompu et qu'une procédure de nettoyage du moteur doit être réalisée. Après cette procédure de nettoyage, une nouvelle tentative (éventuelle) d'allumage du moteur pourra éventuellement être effectuée.

Les valeurs sur lesquelles repose le test de Wald effectué à l'étape D, à savoir les valeurs moyennes et l'écart-type de la pression théorique suivant les hypothèses H0 et H1 (PGC_HO, PGC_H1, $\sigma_{PCG\_HO}$, $\sigma_{PCG\_H1}$) sont recalculées à chaque itération de l'algorithme. Ainsi avantageusement, le test réalisé est actualisé à chaque itération en fonction des caractéristiques du moteur à l'instant considéré.

Après cette présentation du fonctionnement du contrôleur 50 et notamment de l'algorithme mis en oeuvre dans le calculateur 50, la structure matérielle de ce contrôleur va maintenant être présentée. Le contrôleur 50 comporte :

A) une unité d'acquisition 52, configurée pour acquérir, pour chacun des ergols (H,0), la pression d'injection et la masse volumique de l'ergol aux points d'injection dans la chambre de combustion ;

B) une unité de calcul de valeurs moyennes et d'écarts-types 54 configurée pour, en fonction des pressions et masses volumiques calculées à l'étape A), calculer des valeurs moyennes PGC_HO, PGC_H1 et des écarts-types $\sigma$_PCGHO, $\sigma$_PCGH1 d'une pression théorique d'allumage et d'une pression théorique de non-allumage dans la chambre de combustion, qui sont les pressions dans la chambre de combustion respectivement dans l'hypothèse de non-allumage (H0) qui correspond au cas où la combustion n'a pas lieu et dans l'hypothèse d'allumage (H1) qui correspond au cas où la combustion a lieu ;

C) une unité de détermination de statut d'allumage du moteur 56 configurée pour déterminer un statut d'allumage du moteur (S).

L'unité d'acquisition 52 calcule la masse volumique de chacun des ergols à partir de paramètres acquis par des capteurs correspondants, à savoir en fonction de la température et de la pression des ergols, sur la base d'abaques établies à l'avance pour les ergols contenus dans les réservoirs. L'unité de détermination de statut d'allumage du moteur (S) est configurée pour réaliser les opérations suivantes, décrites précédemment :

C1) Détermination des coefficients (A) et (B) permettant de calculer les limites de pression de non-allumage et de pression d'allumage, et

C2) attribuer au statut d'allumage du moteur (S) une valeur allumé, non allumé ou indéterminé, indiquant respectivement que l'on considère, pour l'instant considéré, que le moteur est allumé, qu'il n'est pas allumé, ou que l'on ne sait pas.

L'unité de détermination de statut d'allumage du moteur calcule le statut d'allumage S en suivant les mêmes étapes C1 et C2 que dans le procédé selon l'invention.

Dans ce mode de réalisation, les modules fonctionnels 52 à 56 décrits précédemment sont des modules fonctionnels du dispositif 50 de détection d'allumage d'une chambre à combustion de moteur-fusée.

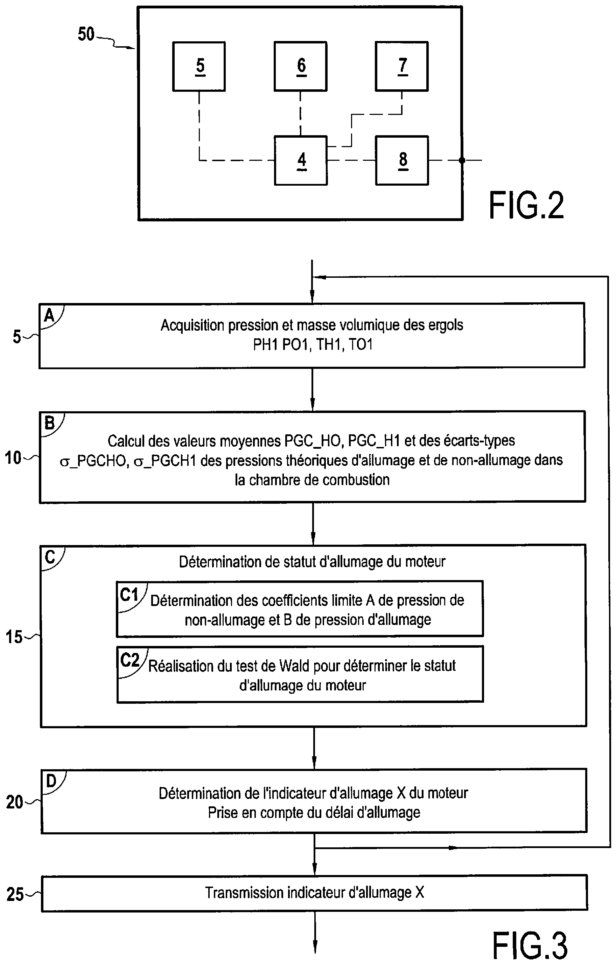

Les unités d'acquisition 52, de calcul de valeurs moyennes et d'écarts-types 54 et de détermination de statut d'allumage du moteur 56 sont réalisées sous forme de modules fonctionnels d'un ordinateur. Cet ordinateur qui constitue le dispositif de contrôle géométrique porte la référence 50 sur les Fig.1 et 2.

Le dispositif de contrôle géométrique 50 dispose de l'architecture matérielle d'un ordinateur, telle qu'illustrée schématiquement à la figure 2. Il comprend notamment un processeur 4, une mémoire vive 5, une mémoire morte 6, une mémoire flash non volatile 7, ainsi que des moyens de communication 8.

La mémoire morte 6 du dispositif de contrôle géométrique 50 constitue un support d'enregistrement conforme à l'invention, lisible par le processeur 4 et sur lequel est enregistré un programme d'ordinateur conforme à l'invention, comportant des instructions pour l'exécution des étapes du procédé de détection d'allumage d'une chambre à combustion de moteur-fusée conforme à l'invention décrit précédemment.

**Revendications**

1. Procédé de détection d'allumage d'une chambre à combustion (10) de moteur-fusée, le procédé comportant les étapes suivantes, réalisées de manière itérative au moyen d'un calculateur (50) :

   A) pour chacun des ergols (H,O), on acquiert des valeurs de grandeurs qui permettent de calculer des valeurs moyennes PGC_H0, PGC_H1 et des écarts-types σ_PGCH0, σ_PGCH1 d'une pression théorique d'allumage et d'une pression théorique de non-allumage dans la chambre de combustion, qui sont les pressions dans la chambre de combustion respectivement dans l'hypothèse de non-allumage (H0) qui correspond au cas où la combustion n'a pas lieu et dans l'hypothèse d'allumage (H1) qui correspond au cas où la combustion a lieu ;
   B) en fonction des valeurs acquises à l'étape A), on calcule les valeurs moyennes PGC_H0, PGC_H1 et les écarts-types σ_PGCH0, σ_PGCH1 de la pression théorique d'allumage et de la pression théorique de non-allumage dans la chambre de combustion ; et
   C) on détermine un statut d'allumage du moteur (S) ; l'étape C) comprenant les étapes :

   C1) on détermine des coefficients A et B permettant de calculer des pressions limites d'allumage et de non-allumage, à partir d'une probabilité de non-détection de l'allumage Pnd et d'une probabilité de fausse alarme de détection d'allumage (Pf), à l'aide des équations suivantes :

   $$A = Pnd\ /\ (1\text{-}Pf)$$

   $$B = (1 - Pnd)/Pf$$

   C2) on attribue à un statut d'allumage du moteur (S) une valeur allumé, non allumé ou indéterminé, indiquant respectivement que l'on considère, pour un instant considéré, que le moteur est allumé, qu'il n'est pas allumé, ou que l'on ne sait pas ; le statut d'allumage (S) étant obtenu :

   . en calculant des bornes d'allumage/non-allumage A1 et B1 et une somme Σ à l'aide des équations suivantes :

   $$A1 = 2lnA + 2n\ln\left(\frac{\sigma_{PGC_{H1}}}{\sigma_{PGC_{H0}}}\right)$$

   $$\Sigma = \sum_{i=n-p}^{n}\left(\frac{\left(PGC_i - PGC_{H0}\right)^2}{\sigma^2_{PGC_{H0}}} - \frac{\left(PGC_i - PGC_{H1}\right)^2}{\sigma^2_{PGC_{H1}}}\right)$$

$$B1 = 2lnB + 2n \ln\left(\frac{\sigma_{PGC\_H1}}{\sigma_{PGC\_H0}}\right)$$

où :

• PGCi est la pression mesurée dans la chambre de combustion à l'instant (ti) correspondant à une boucle de calcul en cours ;
• n est l'indice de la boucle de calcul à l'instant considéré ;
• p est un entier prédéterminé ; et

. en affectant au statut d'allumage (S) une valeur parmi des possibilités Non-allumé, Allumé, Indéterminé, en comparant la somme $\Sigma$ aux bornes d'allumage/non-allumage A1 et B1 :

• Si $\Sigma$ < A1 : on fixe la valeur du statut d'allumage (S) à la valeur « non allumé » ;
• Si A1 < $\Sigma$ < B1 : on fixe la valeur du statut d'allumage (S) à la valeur « indéterminé » ; et
• Si $\Sigma$ > B1 : on fixe la valeur du statut d'allumage (S) à la valeur « allumé ».

2. Procédé de détection d'allumage selon la revendication 1, dans lequel à l'étape B), la valeur moyenne PGC_H1 de la pression théorique d'allumage dans la chambre de combustion dans l'hypothèse où la combustion a lieu est calculée à partir du débit total des ergols injectés dans la chambre de combustion (Qtot), de la vitesse caractéristique des gaz de combustion (C*) et de la section efficace (Seff) d'un divergent d'une tuyère (20) du moteur-fusée.

3. Procédé de détection d'allumage selon la revendication 2, dans lequel à l'étape B), la valeur moyenne PGC_H1 de la pression théorique d'allumage dans la chambre de combustion dans l'hypothèse où la combustion a lieu est calculée grâce à la relation suivante :

$$(2) \quad PGC\_H1 = \frac{Q_{tot}C^*}{Seff}$$

4. Procédé de détection d'allumage selon l'une quelconque des revendications 1 à 3, dans lequel

lors de l'étape A, on acquiert de plus une pression dans la chambre de combustion ; et
l'écart-type $\sigma$ PGC_HO de la pression théorique dans la chambre de combustion dans l'hypothèse (H0) de non-allumage de la chambre est donné par la formule suivante :

$$\sigma_{PGC\_H0} = \sigma_{PGCmes}$$

où $\sigma_{PGCmes}$ représente l'écart-type de la mesure de pression dans la chambre de combustion.

5. Procédé de détection d'allumage selon l'une quelconque des revendications 1 à 4, dans lequel

lors de l'étape A, on acquiert de plus une valeur de la pression atmosphérique $P_{ATM}$ à l'extérieur du moteur-fusée ;
à l'étape B, en fonction des pressions et masses volumiques calculées à l'étape A), on calcule des débits ($Q_O$, $Q_H$) de chacun des ergols ; et
l'écart-type $\sigma$ PGC_H1 de la pression théorique dans la chambre de combustion en cas d'allumage de la chambre est calculé en réalisant les étapes suivantes :

. on calcule un rapport de mélange RM du moteur-fusée et son écart-type $\sigma_{RM}$ par les équations suivantes :

$$RM = \frac{\sqrt{\left(\frac{\rho}{k}\right)_O (POI - Patm)}}{\sqrt{\left(\frac{\rho}{k}\right)_H (PHI - Patm)}}$$

$$\sigma_{RM} = \frac{1}{\sqrt{2}} \frac{\left(\frac{\rho}{k}\right)_O}{\left(\frac{\rho}{k}\right)_H} \frac{1}{(PHI - Patm)} \sqrt{\left(\sigma_{POI}^2 + \frac{(POI - Patm)^2}{(PHI - Patm)^2} \sigma_{PHI}^2\right)}$$

. on calcule alors des écarts-types $\sigma\_C^*$ de la vitesse caractéristique $C^*$ et $\sigma_{QTOT}$ du débit total des ergols injectés dans la chambre de combustion, par les équations suivantes :

$$\sigma_{C^*} = f(\sigma_{RM})$$

$$\sigma_{Qtot} = \sigma_{QH+QO} = \sqrt{\sigma_{QO}^2 + \sigma_{QH}^2}$$

avec pour chaque ergol $\quad \sigma_{Qx} = \frac{1}{\sqrt{2}} \frac{\rho}{k} \sigma_{PxI} \quad$ dans lesquelles :

x représente un ergol quelconque,

$\sigma_{POI}$ et $\sigma_{PHI}$ désignent les écarts-types des pressions POA et PHI des deux ergols à leurs points d'injection,

$k_x$ le coefficient de perte de charge pour l'ergol x,

$\sigma_{Qx}$ *et* $\sigma_{PxI}$ , pour l'ergol x, l'écart type respectivement d'un débit et d'une pression de l'ergol x au point d'injection,

le rapport de mélange RM des deux ergols est égal au rapport entre le débit de comburant sur le débit de carburant à l'injection dans la chambre de combustion,

QO, QH et Qtot sont respectivement un débit de comburant, de carburant, et un débit cumulé des deux ergols, dans la chambre de combustion,

$C^*$ est une vitesse caractéristique des gaz de combustion en sortie de la chambre de combustion, et

f est une fonction prédéterminée ;

. on calcule ensuite l'écart-type $\sigma$ PGC_H1 de la pression théorique dans la chambre de combustion, en cas d'allumage de la chambre au moyen de la formule :

$$\sigma_{PGC\_H1} = \frac{1}{Seff} \sqrt{ \begin{array}{l} \frac{1}{2}(C^*(RM))\left(\left(\left(\frac{\rho}{k}\right)_O \frac{1}{Q_0} \sigma_{POI}\right)^2 + \left(\left(\frac{\rho}{k}\right)_H \frac{1}{Q_H} \sigma_{PHI}\right)^2\right) \\ + \left(\sqrt{\left(\frac{\rho}{k}\right)_O (POI - Patm)} + \sqrt{\left(\frac{\rho}{k}\right)_H (PHI - Patm)}\right)^2 \sigma_{C^*}^2 \end{array} }$$

6. Procédé de détection d'allumage selon l'une quelconque des revendications 1 à 5, dans lequel les grandeurs dont les valeurs sont acquises à l'étape A) incluent, pour chaque ergol, une pression (POI,PHI) et une masse volumique ($\rho\_OI$, $\rho\_HI$) de l'ergol à un point d'injection dans la chambre de combustion.

7. Procédé de démarrage d'un moteur-fusée, dans lequel lors du démarrage d'au moins un moteur du moteur-fusée, on détecte si l'allumage du moteur a bien eu lieu en exécutant le procédé de détection d'allumage selon l'une quelconque des revendications 1 à 6.

8. Programme d'ordinateur sur un support d'informations, et comportant des instructions de code de programme qui, lorsque le programme est exécuté par un ordinateur, conduisent celui-ci à mettre en oeuvre les étapes d'un procédé selon l'une quelconque des revendications 1 à 7.

9. Support d'enregistrement lisible par un ordinateur sur lequel est enregistré le programme d'ordinateur selon la revendication 8.

10. Dispositif de détection d'allumage d'une chambre à combustion (10) de moteur-fusée, le dispositif comportant :

A) une unité d'acquisition (52), configurée pour acquérir, pour chacun des ergols (H,O), des valeurs de grandeurs qui permettent de calculer des valeurs moyennes PGC_H0, PGC_H1 et des écarts-types $\sigma$_PGCH0, $\sigma$_PGCH1 d'une pression théorique d'allumage et d'une pression théorique de non-allumage dans la chambre de combustion, qui sont les pressions dans la chambre de combustion respectivement dans l'hypothèse de non-allumage (H0) qui correspond au cas où la combustion n'a pas lieu et dans l'hypothèse d'allumage (H1) qui correspond au cas où la combustion a lieu ;

**caractérisé en ce que** le dispositif comporte:

B) une unité de calcul de valeurs moyennes et d'écarts-types (54) configurée pour, en fonction des valeurs acquises par l'unité d'acquisition (52), calculer les valeurs moyennes PGC_HO, PGC_H1 et les écarts-types $\sigma$_PCGHO, $\sigma$_PCGH1 de la pression théorique d'allumage et de la pression théorique de non-allumage dans la chambre de combustion ; et

C) une unité de détermination de statut d'allumage du moteur (56) configurée pour déterminer un statut d'allumage du moteur (S) ; l'unité de détermination de statut d'allumage du moteur (S) étant configurée pour :

C1) déterminer des coefficients A et B permettant de calculer des pressions limites d'allumage et de non-allumage, à partir d'une probabilité de non-détection de l'allumage Pnd et d'une probabilité de fausse alarme de détection d'allumage Pf, à l'aide des équations suivantes :

$$A = \frac{Pnd}{1-Pf} \quad et \quad B = \frac{1-Pnd}{Pf} \quad ; et$$

C2) attribuer à un statut d'allumage du moteur (S) une valeur allumé, non allumé ou indéterminé, indiquant respectivement que l'on considère, pour un instant considéré, que le moteur est allumé, qu'il n'est pas allumé, ou que l'on ne sait pas ; le statut d'allumage (S) étant obtenu :

. en calculant des bornes d'allumage/non-allumage A1 et B1 et une somme $\Sigma$ à l'aide des équations suivantes :

$$A1 = 2lnA + 2n \ln\left(\frac{\sigma_{PGC_{H1}}}{\sigma_{PGC_{H0}}}\right)$$

$$\Sigma = \sum_{i=n-p}^{n} \left( \frac{\left(PGC_i - PGC_{H0}\right)^2}{\sigma^2_{PGC_{H0}}} - \frac{\left(PGC_i - PGC_{H1}\right)^2}{\sigma^2_{PGC_{H1}}} \right)$$

$$B1 = 2lnB + 2n \ln\left(\frac{\sigma_{PGC\_H1}}{\sigma_{PGC\_H0}}\right)$$

où :

- PGCi est la pression mesurée dans la chambre de combustion à l'instant (ti) correspondant à la boucle de calcul en cours ;
- n est l'indice de la boucle de calcul à l'instant considéré ;
- p est un entier prédéterminé ;

. en affectant au statut d'allumage (S) une valeur parmi des possibilités Non-allumé, Allumé, Indéterminé, en comparant la somme $\Sigma$ aux bornes d'allumage/non-allumage A1 et B1, et :

- Si $\Sigma$ < A1 : en fixant la valeur du statut d'allumage (S) à la valeur « non allumé » ;
- Si A1 < $\Sigma$ < B1 : en fixant la valeur du statut d'allumage (S) à la valeur « indéterminé » ; et
- Si $\Sigma$ > B1 : en fixant la valeur du statut d'allumage (S) à la valeur « allumé ».

11. Dispositif de détection d'allumage selon la revendication 10, dans lequel dans lequel les grandeurs dont l'unité d'acquisition (52) est configurée pour acquérir les valeurs incluent, pour chaque ergol, une pression (POI,PHI) et une masse volumique ($\rho$_OI, $\rho$_HI) de l'ergol à un point d'injection dans la chambre de combustion.

12. Moteur-fusée (100), comprenant un dispositif de détection d'allumage d'une chambre à combustion (10) de moteur-fusée selon la revendication 10 ou 11.

**Patentansprüche**

1. Verfahren zum Erfassen einer Zündung einer Brennkammer (10) eines Raketentriebwerks, wobei das Verfahren die folgenden Schritte umfasst, die iterativ mittels eines Rechners (50) durchgeführt werden:

A) für jeden der Treibstoffe (H, O) werden Größenwerte erfasst, die ermöglichen, Mittelwerte PGC_H0, PGC_H1 und Standardabweichungen $\sigma$_PGCH0, $\sigma$_PGCH1 eines theoretischen Zünddrucks und eines theoretischen Nichtzünddrucks in der Brennkammer zu berechnen, welches die Drücke in der Brennkammer jeweils in der Annahme einer Nichtzündung (H0), die dem Fall entspricht, in dem die Verbrennung nicht stattfindet, und in der Annahme einer Zündung (H1), die dem Fall entspricht, in dem die Verbrennung stattfindet, sind,

B) in Abhängigkeit von den in Schritt A) ermittelten Werten werden die Mittelwerte PGC_H0, PGC_H1 und die Standardabweichungen $\sigma$_PGCH0, $\sigma$_PGCH1 des theoretischen Zünddrucks und des theoretischen Nichtzünddrucks in der Brennkammer berechnet, und

C) ein Zündstatus des Triebwerks (S) wird bestimmt, wobei Schritt C) die Schritte umfasst:

C1) es werden Koeffizienten A und B bestimmt, die ermöglichen, Zünd- und Nichtzündgrenzdrücke anhand einer Wahrscheinlichkeit eines Nichterfassens der Zündung Pnd und einer Wahrscheinlichkeit eines falschen Alarms eines Erfassens einer Zündung (Pf) mit Hilfe der folgenden Gleichungen zu berechnen:

$$A = Pnd / (1-Pf)$$

$$B = (1 - Pnd)/Pf$$

C2) einem Zündstatus des Triebwerks (S) wird ein Wert gezündet, nicht gezündet oder unbestimmt zugewiesen, der jeweils anzeigt, dass für einen betrachteten Moment betrachtet wird, dass das Triebwerk gezündet ist, dass es nicht gezündet ist oder dass man es nicht weiß, wobei der Zündstatus (S) erhalten wird:

- durch Berechnen der Zünd-/Nichtzündgrenzen A1 und B1 und einer Summe $\Sigma$ mit Hilfe der folgenden Gleichungen:

$$A1 = 2lnA + 2n \ln\left(\frac{\sigma_{PGC_{H1}}}{\sigma_{PGC_{H0}}}\right)$$

$$B1 = 2lnB + 2n \ln\left(\frac{\sigma_{PGC\_H1}}{\sigma_{PGC\_H0}}\right)$$

$$B1 = 2lnB + 2n \ln\left(\frac{\sigma_{PGC\_H1}}{\sigma_{PGC\_H0}}\right)$$

wobei:

- $PGC_i$ der in der Brennkammer zum Zeitpunkt (ti) gemessene Druck ist, der einer laufenden Berechnungsschleife entspricht,
- n der Index der Berechnungsschleife im betrachteten Moment ist,
- p eine vorbestimmte ganze Zahl ist, und
- indem dem Zündstatus (S) ein Wert aus Möglichkeiten nicht gezündet, gezündet, unbestimmt durch Vergleichen der Summe mit den Zünd-/Nichtzündgrenzen A1 und B1 zugewiesen wird:$\Sigma$
- Falls $\Sigma$ < A1 : Der Wert des Zündstatus (S) wird auf den Wert "nicht gezündet" festgelegt,
- Falls A1 < $\Sigma$ < B1 : Der Wert des Zündstatus (S) wird auf den Wert "unbestimmt" festgelegt, und
- Falls $\Sigma$ > B1: Der Wert des Zündstatus (S) wird auf den Wert "gezündet" festgelegt.

2. Verfahren zum Erfassen einer Zündung nach Anspruch 1, bei dem in Schritt B) der Mittelwert PGC_H1 des theoretischen Zünddrucks in der Brennkammer in der Annahme, dass die Verbrennung stattfindet, anhand der Gesamtmenge der in die Brennkammer eingespritzten Treibstoffe (Qtot), der für die Verbrennungsgase charakteristischen Geschwindigkeit (C*) und des Wirkungsquerschnitts (Seff) eines divergenten Teils einer Düse (20) des Raketentriebwerks berechnet wird.

3. Verfahren zum Erfassen einer Zündung nach Anspruch 2, bei dem in Schritt B) der Mittelwert PGC_H1 des theoretischen Zünddrucks in der Brennkammer in der Annahme, dass die Verbrennung stattfindet, mit Hilfe der folgenden Beziehung berechnet wird:

$$(2) \quad PGC\_H1 = \frac{Q_{tot}C^*}{Seff}$$

4. Verfahren zum Erfassen einer Zündung nach einem der Ansprüche 1 bis 3, bei dem

während des Schrittes A zudem ein Druck in der Brennkammer erfasst wird, und
die Standardabweichung $\sigma$ PGC_H0 des theoretischen Drucks in der Brennkammer in der Annahme (H0) eines Nichtzündens der Kammer durch die folgende Formel gegeben ist:

$$\sigma_{PGC\_H0} = \sigma_{PGCmes}$$

wobei $\sigma_{PGCmes}$ die Standardabweichung der Druckmessung in der Brennkammer darstellt.

5. Verfahren zum Erfassen einer Zündung nach einem der Ansprüche 1 bis 4, bei dem

während des Schrittes A zudem ein Wert des atmosphärischen Drucks $P_{ATM}$ außerhalb des Raketentriebwerks erfasst wird,

in Schritt B in Abhängigkeit von den in Schritt A) berechneten Drücken und Dichten die Mengen ($Q_O$, $Q_H$) eines jeden Treibstoffs berechnet werden, und

die Standardabweichung σ PGC_H1 des theoretischen Drucks in der Brennkammer im Falle einer Zündung der Kammer wird berechnet, indem die folgenden Schritte durchgeführt werden:

• es wird ein Mischungsverhältnis RM des Raketentriebwerks und seine Standardabweichung $\sigma_{RM}$ durch die folgenden Gleichungen berechnet:

$$RM = \frac{\sqrt{\left(\frac{\rho}{k}\right)_O (POI - Patm)}}{\sqrt{\left(\frac{\rho}{k}\right)_H (PHI - Patm)}}$$

$$\sigma_{RM} = \frac{1}{\sqrt{2}} \frac{\left(\frac{\rho}{K}\right)_O}{\left(\frac{\rho}{K}\right)_H} \frac{1}{(PHI - Patm)} \sqrt{\left(\sigma_{POI}^2 + \frac{(POI - Patm)^2}{(PHI - Patm)^2} \sigma_{PHI}^2\right)}$$

• dann werden die Standardabweichungen σ_C* der charakteristischen Geschwindigkeit C* und σ $_{QTOT}$ der Gesamtmenge der in die Brennkammer eingespritzten Treibstoffe durch die folgenden Gleichungen berechnet:

$$\sigma_{c^*} = f(\sigma_{RM})$$

$$= \sigma_{QH+QO} = \sqrt{\left(\sigma_{QO}^2 + \sigma_{QH}^2\right)}$$

$$\sigma_{Qx} = \frac{1}{\sqrt{2}} \frac{\rho}{k} \sigma_{Pxl}$$

mit für jeden Treibstoff

in denen:

x einen beliebigen Treibstoff darstellt,

$\sigma_{POI}$ und $\sigma_{PHI}$ die Standardabweichungen der Drücke POA und PHI der beiden Treibstoffe an ihren Einspritzpunkten bezeichnen,

$k_x$ den Druckverlustkoeffizient für den Treibstoff x,

$\sigma_{Qx}$ und $\sigma_{Pxl}$, für den Treibstoff x, die Standardabweichung einer Durchflussmenge bzw. eines Drucks des Treibstoff x am Einspritzpunkt,

das Mischungsverhältnis RM der beiden Treibstoffe ist gleich dem Verhältnis zwischen der Verbrennungsmittelmenge und der Treibstoffmenge beim Einspritzen in die Brennkammer,

QO, QH et Qtot eine Verbrennungsmittelmenge, eine Treibstoffmenge bzw. eine kumulierte Menge der beiden Treibstoffe in der Brennkammer sind,

C* eine charakteristische Geschwindigkeit der Verbrennungsgase am Ausgang der Brennkammer ist, und

f eine vorbestimmte Funktion ist:

• anschließend wird die Standardabweichung σ PGC_H1 des theoretischen Drucks in der Brennkammer, im Falle einer Zündung der Kammer, mittels der Formel berechnet:

$$\sigma_{PGC\_H1} = \frac{1}{Seff} \sqrt{ \frac{1}{2}(C^{*}(RM))\left( \left(\left(\frac{\rho}{k}\right)_O \frac{1}{Q_0}\sigma_{POI}\right)^2 + \left(\left(\frac{\rho}{k}\right)_H \frac{1}{Q_H}\sigma_{PHI}\right)^2 \right) + \left( \sqrt{\left(\frac{\rho}{k}\right)_O}(POI - Patm) + \sqrt{\left(\frac{\rho}{k}\right)_H}(PHI - Patm)\right)^2 \sigma_{C^{*}}^2 }$$

**6.** Verfahren zum Erfassen einer Zündung nach einem der Ansprüche 1 bis 5, bei dem die Größen, deren Werte in Schritt A) erfasst werden, für jeden Treibstoff einen Druck (POI, PHI) und eine Dichte ($\rho$_OI, $\rho$_HI) des Treibstoffs an einem Einspritzpunkt in der Brennkammer einschließen.

**7.** Verfahren zum Starten eines Raketentriebwerks, bei dem während des Startens wenigstens eines Triebwerks des Raketenantriebs durch Durchführen des Zünderfassungsverfahrens nach einem der Ansprüche 1 bis 6 erfasst wird, ob die Zündung des Triebwerks tatsächlich erfolgt ist.

**8.** Computerprogramm auf einem Informationsträger, das Programmcodeanweisungen umfasst, die, wenn das Programm von einem Computer ausgeführt wird, diesen dazu veranlassen, die Schritte eines Verfahrens nach einem der Ansprüche 1 bis 7 durchzuführen.

**9.** Computerlesbares Aufzeichnungsmedium, auf dem das Computerprogramm nach Anspruch 8 gespeichert ist.

**10.** Vorrichtung zum Erfassen einer Zündung einer Brennkammer (10) eines Raketentriebwerks, wobei die Vorrichtung umfasst:

A) eine Erfassungseinheit (52), die dazu ausgebildet ist, für jeden der Treibstoffe (H, O) Größenwerte zu erfassen, die ermöglichen, Mittelwerte PGC_H0, PGC_H1 und Standardabweichungen $\sigma$_PGCH0, $\sigma$_PGCH1 eines theoretischen Zünddrucks und eines theoretischen Nichtzünddrucks in der Brennkammer zu berechnen, welches die Drücke in der Brennkammer jeweils in der Annahme einer Nichtzündung (H0), die dem Fall entspricht, in dem die Verbrennung nicht stattfindet, und in der Annahme einer Zündung (H1), die dem Fall entspricht, in dem die Verbrennung stattfindet, sind,

**dadurch gekennzeichnet, dass** die Vorrichtung umfasst:

B) eine Einheit zum Berechnen von Mittelwerten und von Standardabweichungen (54), die dazu ausgebildet ist, in Abhängigkeit von den durch die Erfassungseinheit (52) ermittelten Werten die Mittelwerte PGC_H0, PGC_H1 und die Standardabweichungen $\sigma$_PCGHO, $\sigma$_PCGH1 des theoretischen Zünddrucks und des theoretischen Nichtzünddrucks in der Brennkammer zu berechnen, und

C) eine Einheit zum Bestimmen eines Zündstatus des Triebwerks (56), die dazu ausgebildet ist, einen Zündstatus des Triebwerks (S) zu bestimmen, wobei die Einheit zum Bestimmen eines Zündstatus des Triebwerks (S) dazu ausgebildet ist:

C1) Koeffizienten A und B zu bestimmen, die ermöglichen, Zünd- und Nichtzündgrenzdrücke anhand einer Wahrscheinlichkeit eines Nichterfassens der Zündung Pnd und einer Wahrscheinlichkeit eines falschen Alarms eines Erfassens einer Zündung (Pf) mit Hilfe der folgenden Gleichungen zu berechnen:

$$A = \frac{Pnd}{1-Pf} \quad \text{und} \quad B = \frac{1-Pnd}{Pf} \text{, und}$$

und

C2) einem Zündstatus des Triebwerks (S) einen Wert gezündet, nicht gezündet oder unbestimmt zuzuweisen, der jeweils anzeigt, dass für einen betrachteten Moment betrachtet wird, dass das Triebwerk gezündet ist, dass es nicht angezündet ist oder dass man es nicht weiß, wobei der Zündstatus (S) erhalten wird:

• durch Berechnen von Zünd-/Nichtzündgrenzen A1 und B1 und einer Summe $\Sigma$ mit Hilfe der folgenden

Gleichungen:

$$A1 = 2lnA + 2n \ln\left(\frac{\sigma}{\sigma}\right.$$

$$\Sigma = \sum_{i=n-p}^{n} \left( \frac{(PGC_i - PGC_{H0})^2}{\sigma_{PGC\_H0}^2} - \frac{(PGC_i - PGC_{H1})^2}{\sigma_{PGC\_H1}^2} \right)$$

$$B1 = 2lnB + 2n \ln\left(\frac{\sigma_{PGC\_H1}}{\sigma_{PGC\_H0}}\right.$$

wobei:

- PGCi der in der Brennkammer zum Zeitpunkt (ti) gemessene Druck ist, der einer laufenden Berechnungsschleife entspricht,
- n der Index der Berechnungsschleife in dem betrachteten Moment ist,
- p eine vorbestimmte ganze Zahl ist,

  - indem dem Zündstatus (S) ein Wert aus Möglichkeiten nicht gezündet, gezündet, unbestimmt durch Vergleichen der Summe $\Sigma$ mit den Zünd-/Nichtzündgrenzen A1 und B1 zugewiesen wird, und:

- Falls $\Sigma$ < A1 : durch Festlegen des Wertes des Zündstatus (S) auf den Wert "nicht gezündet",
- Falls A1 < $\Sigma$ < B1 : durch Festlegen des Wertes des Zündstatus (S) auf den Wert "unbestimmt", und
- Falls $\Sigma$ > B1 : durch Festlegen des Wertes des Zündstatus (S) auf den Wert "gezündet".

11. Vorrichtung zum Erfassen einer Zündung nach Anspruch 10, bei der - deren Erfassungseinheit (52) dazu ausgebildet ist, die Werte zu erfassen - die Größen für jeden Treibstoff einen Druck (POI PHI) und eine Dichte ($\rho\_OI$, $\rho\_HI$) des Treibstoffs an einem Einspritzpunkt in der Brennkammer einschließen.

12. Raketentriebwerk (100), umfassend eine Vorrichtung zum Erfassen einer Zündung einer Brennkammer (10) eines Raketentriebwerks nach Anspruch 10 oder 11.

**Claims**

1. A method for detecting the ignition of a combustion chamber (10) of a rocket engine, the method including the following steps, carried out iteratively by means of a calculator (50):

   A) for each of the propellants (H, O), acquiring values of quantities which allow calculating average values PGC_H0, PGC_H1 and standard deviations $\sigma\_PGCH0$, $\sigma\_PGCH1$ of a theoretical ignition pressure and of a theoretical non-ignition pressure in the combustion chamber which are the pressures in the combustion chamber respectively in the event of non-ignition (H0) which corresponds to the case where the combustion does not take place and in the event of ignition (H1) which corresponds to the case where the combustion takes place;
   B) as a function of the values acquired in step A), calculating the average values PGC_H0, PGC_H1 and the standard deviations $\sigma\_PGCH0$, $\sigma\_PGCH1$ of the theoretical ignition pressure and of the theoretical non-ignition pressure in the combustion chamber; and
   C) determining an ignition status of the engine (S); step C) comprising the following steps:

   C1) determining coefficients A and B which allow calculating ignition and non-ignition pressure limits, from a probability of non-detection of the ignition Pnd and from a probability of false ignition detection alarm (Pf), using the following equations:

$$A = Pnd / (1 - Pf)$$

$$B = (1 - \text{Pnd})/\text{Pf}$$

C2) assigning a value "ignited", "non-ignited" or "undetermined" to an ignition status of the engine (S), indicating respectively that it is considered, for a considered time, that the engine is ignited, that it is not ignited, or that we do not know; the ignition status (S) being obtained:

. by calculating ignition/non-ignition limit values A1 and B1 and a sum $\Sigma$ using the following equations:

$$A1 = 2lnA + 2n \ln\left(\frac{\sigma_{PGC\_H1}}{\sigma_{PGC\_H0}}\right)$$

$$\Sigma = \sum_{i=n-p}^{n} \left(\frac{(PGC_i - PGC_{H0})^2}{\sigma^2_{PGC\_H0}} - \frac{(PGC_i - PGC_{H1})^2}{\sigma^2_{PGC\_H1}}\right)$$

$$B1 = 2lnB + 2n \ln\left(\frac{\sigma_{PGC\_H1}}{\sigma_{PGC\_H0}}\right)$$

where:

• PGCi is the pressure measured in the combustion chamber at the time (ti) corresponding to an ongoing calculation loop;
• n is the index of the calculation loop at the considered time;
• p is a predetermined integer; and

. by assigning to the ignition status (S) a value among the possibilities "Non-ignited", "Ignited", "Undetermined", by comparing the sum $\Sigma$ with the ignition/non-ignition limit values A1 and B1:

• If $\Sigma < A1$: the value of the ignition status (S) is set to the value "non-ignited";
• If $A1 < \Sigma < B1$: the value of the ignition status (S) is set to the value "undetermined"; and
• If $\Sigma > B1$: the value of the ignition status (S) is set to the value "ignited ".

2. The ignition detection method according to claim 1, wherein in step B), the average value PGC_H1 of the theoretical ignition pressure in the combustion chamber in the event that the combustion takes place is calculated from the total flow rate of the propellants injected into the combustion chamber (Qtot), from the characteristic velocity of the combustion gases (C*) and of the cross section (Seff) of a divergent of a nozzle (20) of the rocket engine.

3. The ignition detection method according to claim 2, wherein in step B), the average value PGC_H1 of the theoretical ignition pressure in the combustion chamber in the event that the combustion takes place is calculated thanks to the following relationship:

$$(2) \quad PGC\_H1 = \frac{Q_{tot}C^*}{Seff}$$

4. The ignition detection method according to any one of claims 1 to 3, wherein:

during step A, a pressure in the combustion chamber is moreover acquired; and
the standard deviation $\sigma$ PGC_HO of the theoretical pressure in the combustion chamber in the event (H0) of non-ignition of the chamber is given by the following formula:

$$\sigma_{PGC\_H0} = \sigma_{PGCmes}$$

where $\sigma_{PGCmes}$ represents the standard deviation of the pressure measurement in the combustion chamber.

5. The ignition detection method according to any one of claims 1 to 4, wherein

during step A, a value of the atmospheric pressure $P_{ATM}$ outside the rocket engine is moreover acquired;
in step B, as a function of the pressures and densities calculated in step A), flow rates $(Q_O, Q_H)$ of each of the propellants are calculated; and
the standard deviation $\sigma PGC\_H1$ of the theoretical pressure in the combustion chamber in case of ignition of the chamber is calculated by carrying out the following steps:

. calculating a mixture ratio RM of the rocket engine and its standard deviation $\sigma_{RM}$ by the following equations:

$$RM = \frac{\sqrt{\left(\frac{\rho}{k}\right)_O (POI - Patm)}}{\sqrt{\left(\frac{\rho}{k}\right)_H (PHI - Patm)}}$$

$$\sigma_{RM} = \frac{1}{\sqrt{2}} \frac{\left(\frac{\rho}{K}\right)_O}{\left(\frac{\rho}{K}\right)_H} \frac{1}{(PHI - Patm)} \sqrt{\left(\sigma_{POI}^2 + \frac{(POI - Patm)^2}{(PHI - Patm)^2} \sigma_{PHI}^2\right)}$$

. calculating then standard deviations $\sigma\_C^*$ of the characteristic velocity $C^*$ and $\sigma_{QTOT}$ of the total flow rate of the propellants injected into the combustion chamber, by the following equations:

$$\sigma_{c^*} = f(\sigma_{RM})$$

$$\sigma_{Qtot} = \sigma_{QH+QO} = \sqrt{\left(\sigma_{QO}^2 + \sigma_{QH}^2\right)}$$

with for each propellant $\sigma_{Qx} = \frac{1}{\sqrt{2}} \frac{\rho}{k} \sigma_{PxI}$ wherein:

x represents any propellant,
$\sigma_{POI}$ and $\sigma_{PHI}$ designate the standard deviations of the pressures POA and PHI of the two propellants at their injection points,
$k_x$ the pressure drop coefficient for the propellant x,
$\sigma_{Qx}$ and $\sigma_{pxI}$, for the propellant x, the standard deviation respectively of a flow rate and of a pressure of the propellant x at the injection point,
the mixing ratio RM of the two propellants is equal to the ratio between the flow rate of the oxidizer over the fuel flow rate on injection into the combustion chamber,
QO, QH and Qtot are respectively an oxidizer, fuel flow rate, and a cumulative flow rate of the two propellants, in the combustion chamber,
$C^*$ is a characteristic velocity of the combustion gases leaving the combustion chamber, and
f is a predetermined function;
. calculating then the standard deviation $\sigma PGC\_H1$ of the theoretical pressure in the combustion chamber, in case of ignition of the chamber by means of the formula:

$$\sigma_{PGC\_H1} = \frac{1}{Seff}\sqrt{\frac{1}{2}(C^*(RM))\left(\left(\left(\frac{\rho}{k}\right)_O \frac{1}{Q_0}\sigma_{POI}\right)^2 + \left(\left(\frac{\rho}{k}\right)_H \frac{1}{Q_H}\sigma_{PHI}\right)^2\right) + \left(\sqrt{\left(\frac{\rho}{k}\right)_O}(POI - Patm) + \sqrt{\left(\frac{\rho}{k}\right)_H}(PHI - Patm)\right)^2 \sigma_{C^*}^2}$$

6. The ignition detection method according to any one of claims 1 to 5, wherein the quantities whose values are acquired in step A) include, for each propellant, a pressure (POI,PHI) and a density (p_OI, p_HI) of the propellant at an injection point in the combustion chamber.

7. A method for starting a rocket engine, wherein when starting at least one engine of the rocket engine, it is detected whether the ignition of the engine has indeed taken place by executing the ignition detection method according to any one of claims 1 to 6.

8. A computer program on an information medium, and including program code instructions which, when the program is executed by a computer, lead the latter to implement the steps of a method according to one any one of claims 1 to 7.

9. A computer-readable recording medium on which the computer program according to claim 8 is recorded.

10. A device for detecting the ignition of a combustion chamber (10) of a rocket engine, the device including:

A) an acquisition unit (52) configured to acquire, for each of the propellants (H,O), values of quantities that allow calculating average values PGC_H0, PGC_H1 and standard deviations σ_PGCH0, σ_PGCH1 of a theoretical ignition pressure and of a theoretical non-ignition pressure in the combustion chamber, which are the pressures in the combustion chamber respectively in the event of non-ignition (H0) which corresponds to the case where the combustion did not take place and in the event of ignition (H1) which corresponds to the case where the combustion takes place;

**characterized in that** the device includes:

B) a unit for calculating average and standard deviation values (54) configured to calculate, as a function of the values acquired by the acquisition unit (52), the average values PGC_HO, PGC_H1 and the standard deviations σ_PCGHO, σ_PCGH1 of the theoretical ignition pressure and of the theoretical non-ignition pressure in the combustion chamber; and
C) a unit for determining an ignition status of the engine (56) configured to determine an ignition status of the engine (S); the unit for determining the ignition status of the engine (S) being configured to:

C1) determine coefficients A and B that allow calculating ignition and non-ignition pressure limits, from a probability of non-detection of the ignition Pnd and from a probability of false ignition detection alarm Pf, using the following equations:

$$A = \frac{Pnd}{1-Pf} \text{ and } B = \frac{1-Pnd}{Pf};$$

and
C2) assign to an ignition status of the engine (S) a value "ignited", "non-ignited" or "undetermined", indicating respectively that it is considered, for a considered time, that the engine is ignited, that it is not ignited, or that we do not know; the ignition status (S) being obtained:

. by calculating ignition/non-ignition limit values A1 and B1 and a sum Σ using the following equations:

$$A1 \; = \; 2lnA \; + \; 2n \ln\left(\frac{\sigma_{PGC\_H1}}{\sigma_{PGC\_H0}}\right)$$

$$\Sigma = \sum_{i=n-p}^{n} \left(\frac{(PGC_i - PGC_{H0})^2}{\sigma^2_{PGC\ H0}} - \frac{(PGC_i - PGC_{H1})^2}{\sigma^2_{PGC\ H1}}\right)$$

$$B1 \; = \; 2lnB \; + \; 2n \ln\left(\frac{\sigma_{PGC\_H1}}{\sigma_{PGC\_H0}}\right)$$

where:

- PGCi is the pressure measured in the combustion chamber at the time (ti) corresponding to the ongoing calculation loop;
- n is the index of the calculation loop at the considered time;
- p is a predetermined integer;

. by assigning to the ignition status (S) a value among the possibilities "Non-ignited", "ignited", "Undetermined", by comparing the sum $\Sigma$ with the ignition/non-ignition limit values A1 and B1, and:

- If $\Sigma$ < A1: by setting the value of the ignition status (S) to the value "non-ignited";
- If A1 < $\Sigma$ < B1: by setting the value of the ignition status (S) to the value "undetermined"; and
- If $\Sigma$ > B1: by setting the value of the ignition status (S) to the value "ignited".

11. The ignition detection device according to claim 10, wherein the quantities whose acquisition unit (52) is configured to acquire the values include, for each propellant, a pressure (POI, PHI) and a density (p_OI, p_HI) of the propellant at an injection point in the combustion chamber.

12. A rocket engine (100), comprising a device for detecting the ignition of a combustion chamber (10) of a rocket engine according to claim 10 or 11.

FIG.1

50

| 5 | 6 | 7 |

| 4 | 8 |

FIG.2

**A** Acquisition pression et masse volumique des ergols
PH1 PO1, TH1, TO1

**B** Calcul des valeurs moyennes PGC_HO, PGC_H1 et des écarts-types
σ_PGCHO, σ_PGCH1 des pressions théoriques d'allumage et de non-allumage dans
la chambre de combustion

**C** Détermination de statut d'allumage du moteur

**C1** Détermination des coefficients limite A de pression de
non-allumage et B de pression d'allumage

**C2** Réalisation du test de Wald pour déterminer le statut
d'allumage du moteur

**D** Détermination de l'indicateur d'allumage X du moteur
Prise en compte du délai d'allumage

Transmission indicateur d'allumage X

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2997454
- US 20030010015 A